# EUROPÄISCHE PATENTSCHRIFT

(11) **EP 3 218 658 B1**
(45) Veröffentlichungstag und Bekanntmachung des Hinweises auf die Patenterteilung: **28.10.2020**
(21) Anmeldenummer: 14798822.4
(22) Anmeldetag: 13.11.2014
(51) Int. Cl.: F25D 3/10, F25D 29/00

(54) **GEFRIERMASCHINE MIT BEHÄLTER FÜR GEFRORENE PROBEN**
FREEZING MACHINE WITH CONTAINER FOR FROZEN SAMPLES
MACHINE DE CONGÉLATION MUNIE D'UN RÉCIPIENT POUR ÉCHANTILLONS CONGELÉS

(43) Veröffentlichungstag der Anmeldung: 20.09.2017
(73) Patentinhaber: Leica Mikrosysteme GmbH, 1170 Wien (AT)
(72) Erfinder: LANGE, Robert, 1140 Wien (AT); TOMOVA, Cveta, 1190 Wien (AT)
(74) Vertreter: Frommberger, Moritz
(86) Internationale Anmeldenummer: PCT/EP2014/074425
(87) Internationale Veröffentlichungsnummer: WO 2016/074720

(56) Entgegenhaltungen:
- US-A- 4 723 420
- US-A- 5 205 128
- US-A1- 2009 133 410

## Beschreibung

Die vorliegende Erfindung betrifft eine Gefriermaschine, insbesondere eine Hochdruckgefriermaschine, mit einem Behälter zur Aufnahme von gefrorenen Proben sowie ein Verfahren zum Transferieren von gefrorenen Proben in einen solchen Behälter.

### Stand der Technik

Das Gefrieren von Proben, insbesondere unter Hochdruck, ist eine viel genutzte Methode zur Vorbereitung von Proben, bspw. zur Betrachtung unter einem Elektronenmikroskop. Dieses Hochdruckgefrieren ermöglicht es, wasserhaltige biologische und industrielle Proben nahe ihrem ursprünglichen Zustand zu betrachten. Durch das Gefrieren bei Drücken von in etwa 2000 bar werden bspw. Eiskristallbildung unterdrückt und strukturelle Schäden an der Probe vermieden. Der Prozess wird als Vitrifizieren bezeichnet, d.h. das Festwerden einer Flüssigkeit durch Erhöhung ihrer Viskosität, während sie abgekühlt wird - wobei eine Kristallisation ausbleibt und somit ein amorphes Material entsteht. Das wird erreicht durch extrem schnelles Abkühlen (z. B. in flüssigem Stickstoff) meist im Zusammenspiel mit Zusätzen, die die Kristallisation verhindern (sog. Kryoprotektiva).

Gefriermaschinen, insbesondere Hochdruckgefriermaschinen, die zu dem oben beschriebenen Gefrieren von Proben benutzt werden, sind erhältlich. Diese Gefriermaschinen ermöglichen es zwar, eine Probe zu gefrieren, jedoch stellt sich im Anschluss das Problem der weiteren Handhabung, da die Kühlkette möglichst nicht unterbrochen werden soll.

Von der Anmelderin ist eine Gefriermaschine unter der Bezeichnung Leica EM HPM100 verfügbar, die zu diesem Zweck einen mit flüssigem Stickstoff gekühlten Behälter umfasst, in welchen die Proben nach dem Gefriervorgang automatisch eingebracht werden. Dies ermöglicht zwar zunächst eine Sicherstellung der Kühlkette, jedoch gibt es keine Möglichkeit, in den Behälter eingebrachte Proben zu sortieren oder nachzuverfolgen. Ein Gefrieren von verschiedenen Proben in Serie ist somit nicht oder nur mit zusätzlichem Aufwand möglich.

Weiterhin ergibt sich bei einem Gefrieren in Serie das Problem, dass der im Behälter befindliche Vorrat an flüssigem Stickstoff ggf. nicht bis zum Ende der Serie ausreicht. Daher muss die Serie ggf. unterbrochen werden, um den Behälter wieder mit flüssigem Stickstoff zu füllen.

Aus der US 5 205 128 A ist ein System zum Gefrieren und Aufbewahren von Proben bekannt, bei dem mehrere Behälter unterschiedlicher Temperatur verwendet werden, in denen jeweils mittels einer Transfereinrichtung aus einer Gefriereinrichtung entnommene gefrorene Proben eingebracht werden können.

Es stellt sich daher die Aufgabe, eine Möglichkeit anzugeben, auch längere Serien von Gefriervorgängen von Proben, insbesondere auch mit unterschiedlichen Proben, einfach durchführen zu können.

### Offenbarung der Erfindung

Erfindungsgemäß werden eine Gefriermaschine und ein Verfahren mit den Merkmalen der unabhängigen Patentansprüche vorgeschlagen. Vorteilhafte Ausgestaltungen sind Gegenstand der Unteransprüche sowie der nachfolgenden Beschreibung.

### Vorteile der Erfindung

Eine erfindungsgemäße Gefriermaschine dient zum Gefrieren von Proben. Dazu umfasst die Gefriermaschine eine Gefriereinrichtung zum Gefrieren einer in der Gefriermaschine aufgenommenen Probe, einen Behälter zur Aufnahme der gefrorenen Probe mit einem Reservoir für flüssigen Stickstoff und eine Transfervorrichtung zum Transferieren der gefrorenen Probe aus der Gefriereinrichtung in den Behälter. Der Behälter weist wenigstens zwei voneinander getrennte Aufnahmeeinrichtungen für jeweils wenigstens eine gefrorene Probe auf und eine Auswählvorrichtung ist zum Auswählen einer der Aufnahmeeinrichtungen für eine in den Behälter zu transferierende, gefrorene Probe vorgesehen. Die Gefriermaschine ist nun dazu eingerichtet ist, den Transfer der gefrorenen Probe mittels der Transfervorrichtung in die jeweils ausgewählte Aufnahmeeinrichtung des Behälters durchzuführen.

Eine solche Gefriermaschine, bei welcher es sich insbesondere um eine Hochdruckgefriermaschine handelt, ermöglicht es, verschiedene Proben nach dem jeweiligen Gefriervorgang auf einfache und schnelle Weise getrennt in einen gekühlten Behälter einzubringen, ohne eine Serie von Gefriervorgängen, bspw. beim Wechsel von einer Probenart zu einer anderen, unterbrechen zu müssen, um bspw. den Behälter zu wechseln. Die Zuordenbarkeit einer Probe zum jeweiligen Gefriervorgang bleibt aufgrund der wenigstens zwei getrennten Aufnahmeeinrichtungen in dem Behälter erhalten.

Vorzugsweise sind die wenigstens zwei Aufnahmeeinrichtungen verschiebbar und/oder drehbar im Behälter angeordnet. Zum einen können so die Aufnahmeeinrichtungen einfach im Behälter umplatziert werden, bspw. unter einen Auswurf der Gefriermaschine, zum anderen kann eine herkömmliche Gefriermaschine zumindest mit einer herkömmlichen Gefriereinrichtung und Transfervorrichtung weiter verwendet werden und eine konstruktive Umgestaltung kann auf den Bereich nach dem Probenauswurf beschränkt bleiben.

Vorteilhafterweise weist die Auswählvorrichtung Antriebsmittel, mittels denen die wenigstens zwei Aufnahmeeinrichtungen verschiebbar und/oder drehbar sind, auf. Insbesondere können die Antriebsmittel einen motorischen Antrieb aufweisen. Dies ermöglicht eine besonders einfache und bequeme Positionierung.

Es ist von Vorteil, wenn die Gefriermaschine dazu eingerichtet ist, die für die zu transferierende Probe ausgewählte Aufnahmeeinrichtung automatisch so zu positionieren, dass die Probe in die Aufnahmeeinrichtung transferiert wird. Damit kann besonders einfach und schnell eine Serie von Gefriervorgängen mit unterschiedlichen Proben durchgeführt werden.

Erfindungsgemäß sind die wenigstens zwei Aufnahmeeinrichtungen aus dem Behälter entnehmbar. Dies ermöglicht eine einfache weitere Behandlung der einzelnen Proben bspw. nach der Entnahme des Behälters aus der Gefriermaschine. Zur Erhaltung der Zuordenbarkeit sind die Aufnahmeeinrichtungen zweckmäßigerweise unterscheidbar, bspw. nummeriert oder anders gekennzeichnet.

Es ist weiterhin von Vorteil, wenn die Gefriermaschine dazu eingerichtet ist, eine mit einer Probe befüllte Aufnahmeeinrichtung dem Gefriervorgang der Probe zuzuordnen und die Zuordnung abzuspeichern und/oder auszugeben. Dies ermöglicht eine sofortige und/oder eine spätere Nachverfolgbarkeit der Zuordnung. Insbesondere in Kombination mit der erwähnten Kennzeichnung der Aufnahmeeinrichtung wird eine schnelle und sichere Durchführung von Gefriervorgängen unterschiedlicher Proben ermöglicht.

Erfindungsgemäß ist die Gefriermaschine zur automatischen Befüllung des Reservoirs mit flüssigem Stickstoff eingerichtet. Damit kann eine längere Serie von Gefriervorgängen durchgeführt werden, ohne ggf. manuell flüssigen Stickstoff nachfüllen zu müssen. Auch Mittel zur Kontrolle des Füllstandes des flüssigen Stickstoffs können am Behälter vorgesehen sein, bspw. zur zusätzlichen Überprüfung.

Ein erfindungsgemäßes Verfahren dient zum Transferieren von gefrorenen Proben in eine ausgewählte Aufnahmeeinrichtung eines dafür vorgesehenen und wenigstens zwei voneinander getrennte Aufnahmeeinrichtungen umfassenden Behälters. Dabei wird eine der Aufnahmeeinrichtungen ausgewählt und eine Probe wird nach einem zugehörigen Gefriervorgang in die ausgewählte Aufnahmeeinrichtung transferiert. Vorteilhafterweise wird die ausgewählte Aufnahmeeinrichtung mittels Verschieben und/oder Drehen für das Transferieren der Probe positioniert. Auch ist es zweckmäßig, wenn die ausgewählte Aufnahmeeinrichtung der Probe und/oder einem zu der Probe gehörigen Gefriervorgang zugeordnet und die Zuordnung abgespeichert und/oder ausgegeben wird.

Bzgl. der Vorteile des erfindungsgemäßen Verfahrens wird zur Vermeidung von Wiederholungen auf die obigen Ausführungen zur erfindungsgemäßen Gefriermaschine verwiesen.

Weitere Vorteile und Ausgestaltungen der Erfindung ergeben sich aus der nachfolgenden Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im Folgenden unter Bezugnahme auf die Zeichnung ausführlich beschrieben.

### Figurenbeschreibung

Figur 1 zeigt einen Ausschnitt einer erfindungsgemäßen Gefriermaschine mit einem Behälter in einer bevorzugten Ausgestaltung.
Figur 2 zeigt den Ausschnitt aus Figur 1 in einer anderen Arbeitsposition.
Figur 3 zeigt den Ausschnitt aus Figur 1 bzw. 2 in einer weiteren Arbeitsposition.
Figur 4 zeigt den Behälter einer erfindungsgemäßen Gefriermaschine in einer bevorzugten Ausgestaltung.
Figur 5 zeigt den Behälter aus Figur 4 in einer anderen Arbeitsposition.
Figur 6 zeigt den Behälter aus Figur 4 bzw. 5 mit vom Reservoir für flüssigen Stickstoff getrennten Aufnahmeeinrichtungen.
Figur 7 zeigt eine beispielhafte Probenkassette mit Objektträger zur Verwendung in einer erfindungsgemäßen Gefriermaschine.

In der folgenden Figurenbeschreibung bezeichnen gleiche Bezugsziffern gleiche Teile, wobei der Übersichtlichkeit halber nicht in jeder Figur alle Bezugsziffern dargestellt sind.

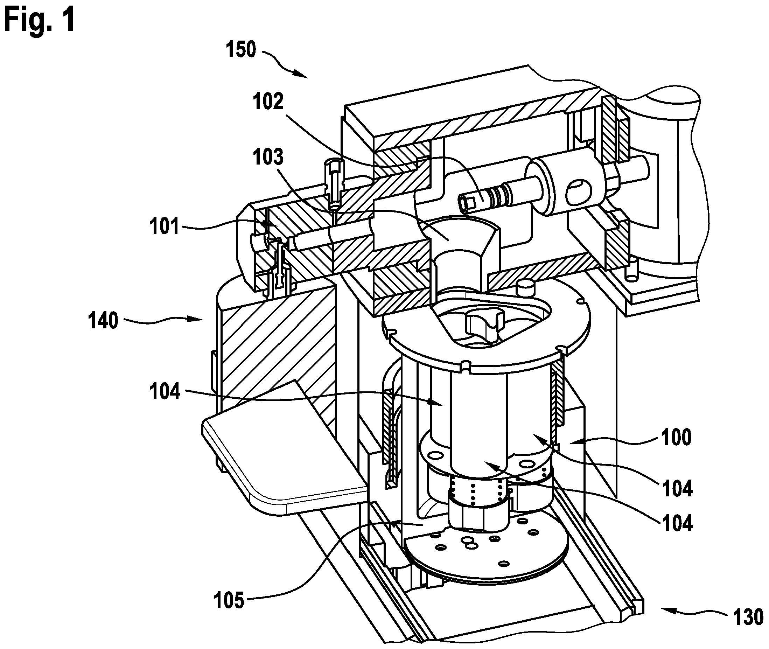

In Figur 1 ist ein Ausschnitt einer als Hochdruckgefriermaschine ausgebildeten Gefriermaschine 150 dargestellt. Die Hochdruckgefriermaschine 150 umfasst eine Lade-/Entladevorrichtung in Form einer Einschubvorrichtung 130. Auf der Einschubvorrichtung 130 ist ein Behälter 100 mit vorliegend drei Aufnahmeeinrichtungen 104 platziert. Hierzu sei angemerkt, dass die Anzahl der Aufnahmeeinrichtungen vorliegend lediglich beispielhaft ist. Ebenso sind nur zwei oder aber auch vier oder mehr Aufnahmeeinrichtungen denkbar.

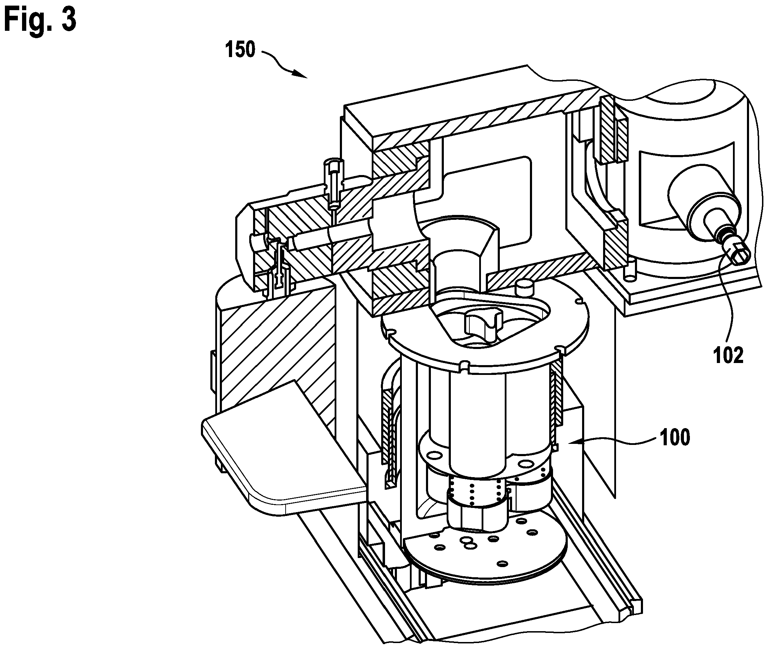

Die Hochdruckgefriermaschine 150 umfasst weiterhin eine Gefriereinrichtung 140 mit einer Hochdruckkammer 101, wobei Elemente zur Druckerzeugung bei verwendetem flüssigem Stickstoff der Übersichtlichkeit halber nicht dargestellt sind. Eine Probe, welche unter Hochdruck gefroren werden soll, wird in einer Halterung (insbesondere Probenkassette) im Greifer 102 positioniert. Für eine detailliertere Beschreibung zur Positionierung einer Probe im Greifer sei an dieser Stelle auf Figur 3 verwiesen. Über einen pneumatischen Kolben kann der Greifer in die Hochdruckkammer 101 eingeschoben werden.

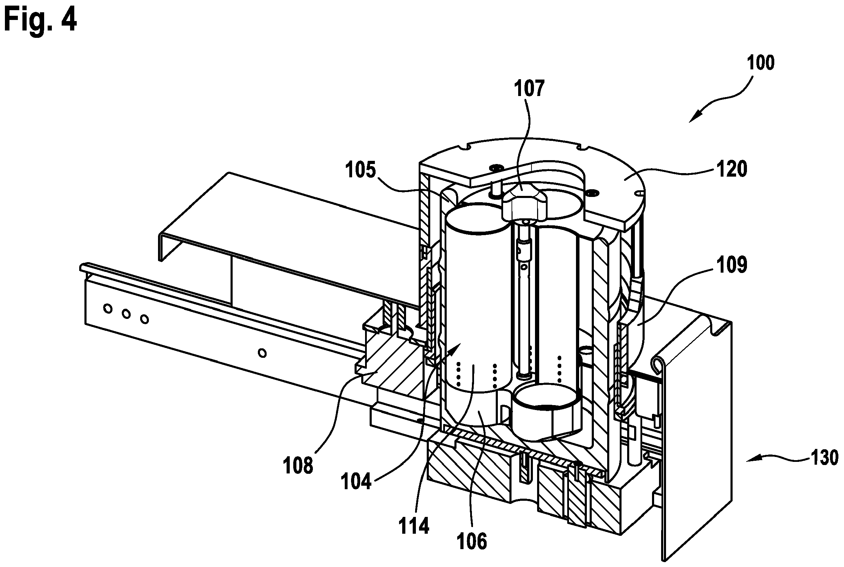

In Figur 1 ist der Greifer 102 in einer Auswurfposition dargestellt. Dabei handelt es sich um eine Arbeitsposition nach einem Gefriervorgang. Ein Mechanismus zum Lösen der Probe, z.B. ein beweglicher Zapfen zum Schieben der Probe aus dem Greifer, ist der Übersichtlichkeit halber hier nicht gezeigt. Ein Fangtrichter 103 lenkt eine fallende Probe in eine der Aufnahmeeinrichtungen 104. Die Aufnahmeeinrichtungen 104 können dabei in der gezeigten Ausgestaltung automatisch gedreht werden, sodass für eine in den Behälter zu transferierende Probe eine der Aufnahmeeinrichtungen 104 ausgewählt werden kann. Zur weiteren Beschreibung des Behälters 100 sei auf die Figuren 4 bis 6 verwiesen.

Weiterhin ist die Gefriermaschine 150 dazu eingerichtet, die Aufnahmeeinrichtung, in welche eine Probe transferiert wird, mit der Probe und/oder dem entsprechenden Gefriervorgang zu verknüpfen. Damit werden eine Zuordnung und eine Nachverfolgbarkeit gewährleistet. Diese Verknüpfung kann bspw. mittels einer Recheneinheit durchgeführt werden, in der bspw. eine Liste mit einer Zuordnung, in welcher Aufnahmeeinrichtung sich welche Probe befindet, gespeichert ist. Ebenso kann die Verknüpfung ausgegeben werden, bspw. über ein Display und/oder einen Drucker. Selbstverständlich ist es dabei auch denkbar, mehr als eine Probe in eine Aufnahmeeinrichtung einzubringen. Dazu und zum Transferieren in die Aufnahmeeinrichtungen (ggf. inkl. dem Gefriervorgang) können bspw. entsprechende Sequenzen an der Gefriermaschine 150 programmiert werden.

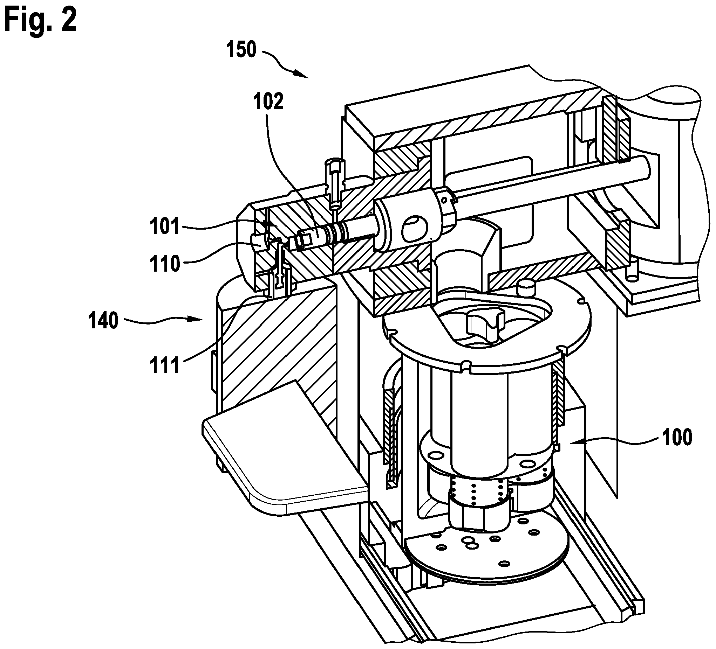

In Figur 2 ist derselbe Ausschnitt der Hochdruckgefriermaschine 150 wie in Figur 1 gezeigt. Der Greifer 102 befindet sich jedoch in einer anderen Arbeitsposition, er ist in die Hochdruckkammer 101 eingeschoben. Beim Gefriervorgang wird über eine Zuleitung 110 nach Öffnen eines Ventils 111 flüssiger Stickstoff unter hohem Druck (in etwa 2000 bar) in die Hochdruckkammer 101 gepresst und gefriert die in der Hochdruckkammer befindliche Probe.

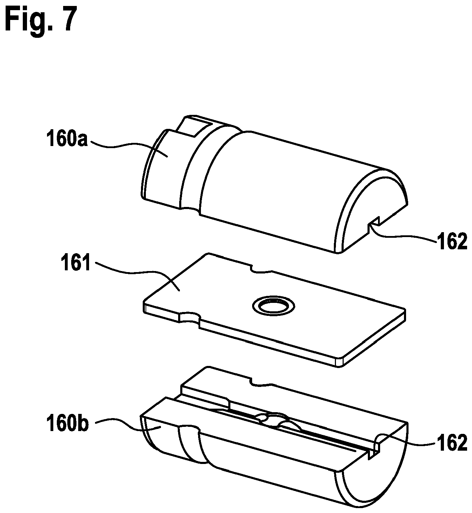

In Figur 3 ist erneut derselbe Ausschnitt der Hochdruckgefriermaschine 150 wie in Figur 1 gezeigt. Der Greifer 102 befindet sich hier jedoch in einer Beladeposition zur Aufnahme einer neuen Probe. Eine Probe wird dazu von vorne zugeführt, insbesondere erfolgt dies manuell durch einen Bediener der Hochdruckgefriermaschine. Üblicherweise weist die Gefriermaschine dazu eine Arbeitsplatte (Tisch) auf, auf der der Bediener die Proben vorbereiten und auf einen Probenträger (z.B. Objektträger, "slide") aufbringen kann. Dazu kann an der Hochdruckgefriermaschine bspw. ein Mikroskop vorgesehen sein, welches dem Bediener die Bearbeitung, die Vorbereitung und das Überführen der Proben auf den Objektträger erleichtert. Jedoch ist auch eine automatische Zuführung der Probe denkbar. Der Objektträger mit der Probe wird dann üblicherweise in eine Probenkassette eingebracht. Die Probenkassette kann Teil des Greifers sein oder vom Greifer gegriffen werden. Eine beispielhafte Probenkassette besteht aus zwei Zylinderhälften mit Kanälen für den flüssigen Stickstoff, wobei der Objektträger zwischen den zwei Zylinderhälften fixiert wird. Für eine genauere Beschreibung der Probenkassette wird auf Figur 7 verwiesen.

Zum Gefrieren der Probe wird der Greifer 102 mit der Probenkassette nun in der in den Figuren 1 bis 3 dargestellten Hochdruckgefriermaschine um ca. 90° im Uhrzeigersinn um eine vertikale Achse gedreht und dann mittels des pneumatischen Kolbens in Richtung der Hochdruckkammer 101 geschoben. Dabei wird die Probenkassette mit der Probe in die Hochdruckkammer 101 eingeschoben, wobei der Greifer 102 die Hochdruckkammer druckfest verschließt. Zum Wechseln zwischen den verschiedenen Arbeitspositionen ist der Greifer 102 bspw. mit einem elektrischen Antrieb ausgestattet, mittels welchem er um die vertikale Achse drehbar ist.

In die Hochdruckkammer 101 wird nun flüssiger Stickstoff - wie oben erwähnt - unter hohem Druck eingefüllt und dringt durch die Kanäle der Probenkassette an die Probe, die dadurch gefriert. Anschließend wird die Probenkassette von dem Greifer 102 mittels des pneumatischen Kolbens wieder aus der Hochdruckkammer 101 herausgebracht. Der Greifer 102 fährt dann in die in Figur 2 dargestellte Auswurfposition und die Probenkassette mit der Probe kann in den Behälter 100 bzw. in eine der Aufnahmeeinrichtungen 104 des Behälters 100 transferiert werden. Vorliegend erfolgt das Transferieren der Probe in einfacher Weise, indem die Probenkassette aus dem Greifer ausgeworfen und anschließend - wie oben bereits erwähnt - fällt und über den Trichter 103 in den Behälter 100 bzw. in die entsprechend positionierte Aufnahmeeinrichtung 104 gelenkt wird.

In Figur 4 ist die Lade-/Entladevorrichtung bzw. Einschubvorrichtung 130 mit dem Behälter 100 dargestellt. Sie ist als eine motorisierte Schublade ausgebildet, die aus der Gefriermaschine heraus- und in die Gefriermaschine hineingefahren werden kann.

Ein Motor 108 ist dazu vorgesehen, mittels Riemen einen Außenring 109, welcher wiederum über eine Platte 120 mit den Aufnahmeeinrichtungen 104 verbunden ist, zu drehen. Eine Verbindung zwischen dem Außenring und der Platte 120 wird über vom Außenring abstehende Schrauben, die in entsprechende Aussparungen am Rand der Platte 120 eingreifen, hergestellt. Ein Reservoir bzw. ein sog. Dewar 105 für die Aufnahme von flüssigem Stickstoff bleibt während der Drehung in fester Position.

Die Aufnahmeeinrichtungen 104 sind in dem mit flüssigem Stickstoff gefüllten Dewar 105 angeordnet. Die Füllung des Dewars 105 mit flüssigem Stickstoff erfolgt vorliegend automatisch mit einer hier nicht weiter dargestellten Befüllvorrichtung. Wie bereits eingangs erwähnt, wird durch eine solche automatische Befüllung des Dewars 105 die Anzahl der Proben, die in Serie gefroren werden können, erhöht. Aufgrund der automatischen Befüllung kann auf eine Anzeige des Füllstandes des flüssigen Stickstoffs - welche bei bislang verwendeten Behältern mit Dewar meist vorgesehen ist - verzichtet werden. Aus Sicherheitsgründen kann eine solche Anzeige jedoch weiterhin vorgesehen sein.

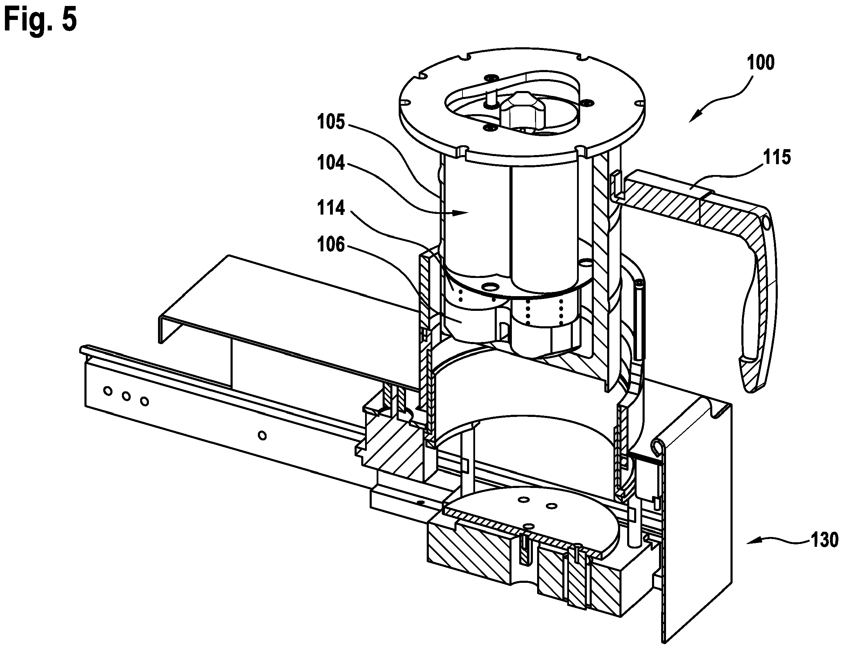

In Figur 5 ist erneut die Einschubvorrichtung 130 mit dem Behälter 100 dargestellt, jedoch ist der Behälter 100, umfassend den Dewar 105, die Aufnahmeeinrichtungen 104 bestehend aus Aufnahmeröhrchen 114 und einem Boden 106, sowie einer Platte 120, in einer angehobenen Position, d.h. in einer Entnahmeposition, gezeigt. Zur Entnahme kann bspw. ein an dem Dewar 105 anbringbarer Griff 115 verwendet werden. Es versteht sich, dass sich die Einschubvorrichtung 130 mit dem Behälter 100 zur Entnahme in einer gegenüber dem Transferieren von Proben aus der Gefriermaschine ausgefahrenen Position befinden muss.

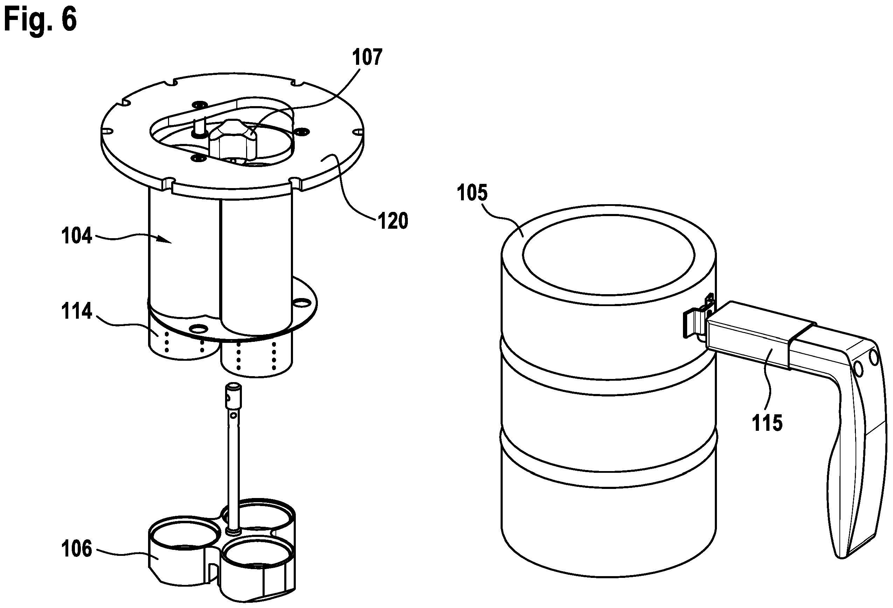

In Figur 6 ist der Dewar 105 mit dem Griff 115 zur Entnahme und getrennt von einem Einsatz mit den Aufnahmeröhrchen 114 und dem entsprechendem Boden 106 gezeigt. Der Boden 106 ist lösbar über eine Schraube 107 mit den Aufnahmeröhrchen 114 verbunden. Dabei bilden die Aufnahmeröhrchen 114 zusammen mit dem Boden 106, der den Aufnahmeröhrchen 114 entsprechende Segmente aufweist, die Aufnahmeeinrichtungen 104.

Zur Entnahme der Proben aus den Aufnahmeeinrichtungen 104 wird der Dewar 105 angehoben und bspw. in ein externes Manipulationsgefäß (bspw. eine mit flüssigem Stickstoff gefüllte Styroporbox) gebracht. Anschließend wird die Schraube 107 gelöst. Die Proben werden aus dem Boden 106 bzw. dessen einzelnen Segmenten entnommen. Die Segmente des Bodens 106 als Teil der Aufnahmeeinrichtungen 104 sind innen nummeriert und haben zur Platte 120 eine eindeutige mechanische Verbindung. So bleibt eine eindeutige Zuordnung von Proben bzw. deren Gefriervorgängen zu den Aufnahmeeinrichtungen, insbesondere zusammen mit der durch die Gefriermaschine durchgeführten Zuordnung, erhalten.

In Figur 7 ist eine beispielhafte Probenkassette bestehend aus der oberen Zylinderhälfte 160a und der unteren Zylinderhälfte 160b gezeigt. Der Objektträger 161 mit der in der Mitte des Objektträgers platzierten Probe wird in die Probenkassette 160a, 160b, d.h. zwischen die beiden Zylinderhälften eingebracht.

Die Probenkassette 160a, 160b kann dann vom Greifer 102 gegriffen und in die Hochdruckkammer 101 eingebracht werden. Die beiden Zylinderhälften 160a und 160b weisen Kanäle 162 auf, über welche der flüssige Stickstoff an die auf dem Objektträger 162 platzierte Probe gelangen kann.

## Patentansprüche

1. Gefriermaschine (150) zum Gefrieren von Proben, umfassend
eine Gefriereinrichtung (140) zum Gefrieren einer in der Gefriermaschine (150) aufgenommenen Probe,
einen Behälter (100) zur Aufnahme der gefrorenen Probe mit einem Reservoir (105) für flüssigen Stickstoff, und
eine Transfervorrichtung zum Transferieren der gefrorenen Probe aus der Gefriereinrichtung (140) in den Behälter (100),
**dadurch gekennzeichnet, dass** der Behälter (100) wenigstens zwei voneinander getrennte Aufnahmeeinrichtungen (104) für jeweils wenigstens eine gefrorene Probe aufweist, wobei die wenigstens zwei Aufnahmeeinrichtungen (104) in dem mit flüssigem Stickstoff zu füllendem Reservoir (105) anordenbar sind und aus dem Behälter (100) entnehmbar sind,
wobei eine Auswählvorrichtung zum Auswählen einer der Aufnahmeeinrichtungen (104) für eine in den Behälter (100) zu transferierende, gefrorene Probe vorgesehen ist,
wobei die Gefriermaschine (150) dazu eingerichtet ist, den Transfer der gefrorenen Probe mittels der Transfervorrichtung in die ausgewählte Aufnahmeeinrichtung (104) des Behälters (100) durchzuführen, und
wobei die Gefriermaschine (150) zur automatischen Befüllung des Reservoirs (105) mit flüssigem Stickstoff eingerichtet ist.

2. Gefriermaschine (150) nach Anspruch 1, wobei die wenigstens zwei Aufnahmeeinrichtungen (104) verschiebbar und/oder drehbar im Behälter (100) angeordnet sind.

3. Gefriermaschine (150) nach Anspruch 2, wobei die Auswählvorrichtung Antriebsmittel (108, 109), mittels denen die wenigstens zwei Aufnahmeeinrichtungen (104) verschiebbar und/oder drehbar sind, aufweist.

4. Gefriermaschine (150) nach einem der vorstehenden Ansprüche, wobei die Gefriermaschine (150) dazu eingerichtet ist, die für die zu transferierende Probe ausgewählte Aufnahmeeinrichtung (104) automatisch so zu positionieren, dass die Probe in die Aufnahmeeinrichtung transferiert wird.

5. Gefriermaschine (150) nach einem der vorstehenden Ansprüche, wobei die Gefriermaschine (150) dazu eingerichtet ist, die für die zu transferierende Probe ausgewählte Aufnahmeeinrichtung (104) der Probe und/oder einem zu der Probe gehörigen Gefriervorgang zuzuordnen und die Zuordnung abzuspeichern und/oder auszugeben.

6. Verfahren zum Transferieren von gefrorenen Proben in einer Gefriermaschine (150) in eine ausgewählte Aufnahmeeinrichtung (104) eines dafür vorgesehenen Behälters (100) der Gefriermaschine (150) zur Aufnahme der gefrorenen Probe mit einem Reservoir (105) für flüssigen Stickstoff, wobei der Behälter (100) wenigstens zwei voneinander getrennte Aufnahmeeinrichtungen (104) umfasst, die in dem mit flüssigem Stickstoff gefüllten Reservoir (105) anordenbar sind und aus dem Behälter (100) entnehmbar sind, wobei die Gefriermaschine (150) zur automatischen Befüllung des Reservoirs (105) mit flüssigem Stickstoff eingerichtet ist
wobei eine der Aufnahmeeinrichtungen (104) ausgewählt wird, und
wobei eine Probe nach einem zugehörigen Gefriervorgang automatisch in die ausgewählte Aufnahmeeinrichtung (104) transferiert wird.

7. Verfahren nach Anspruch 6, wobei die ausgewählte Aufnahmeeinrichtung (104) mittels Verschieben und/oder Drehen für das Transferieren der Probe automatisch positioniert wird.

8. Verfahren nach Anspruch 6 oder 7, wobei die ausgewählte Aufnahmeeinrichtung (104) der Probe und/oder einem zu der Probe gehörigen Gefriervorgang automatisch zugeordnet und die Zuordnung abgespeichert und/oder ausgegeben wird.

9. Verfahren nach Anspruch 6, 7 oder 8, wobei die gefrorene Probe in einer Gefriermaschine (150) nach einem der Ansprüche 1 bis 5 transferiert wird.

## Claims

1. Freezing machine for freezing samples comprising:
a freezing device (140) for freezing a sample received in the freezing machine (150),
a container (100) for receiving the frozen sample, with a reservoir (105) for liquid nitrogen, and
a transfer device for transferring the frozen sample from the freezer (140) to the container (100),
**characterized in that** the container (100) comprises at least two separate receiving devices (104) for at least one frozen sample each, wherein the at least two receiving devices (104) can be arranged in the reservoir (105) to be filled with liquid nitrogen and can be removed from the container (100),
wherein a selection device is provided, for selecting one of the receiving means (104) for a frozen sample to be transferred into the container (100),
wherein the freezing machine (150) is configured to perform the transfer of the frozen sample by means of the transfer device into the selected receiving device (104) of the container (100), and
wherein the freezing machine (150) is configured to automatically fill the reservoir (105) with liquid nitrogen.

2. Freezing machine (150) according to claim 1, wherein the at least two receiving devices (104) are arranged displaceably and/or rotatably in the container (100).

3. Freezing machine (150) according to claim 2, wherein the selection device comprises drive means (108, 109) by means of which the at least two receiving devices (104) are displaceable and/or rotatable.

4. Freezing machine (150) according to any of the preceding claims, wherein the freezing machine (150) is configured to automatically position the receiving device (104) selected for the sample to be transferred such that the sample is transferred into the receiving device.

5. Freezing machine (150) according to any of the preceding claims, wherein the freezing machine (150) is configured to assign the receiving device (104) selected for the sample to be transferred to the sample and/or to a freezing process associated with the sample and to store and/or output the assignment.

6. Method for transferring frozen samples in a freezer machine (150) to a selected receiving device (104) of a designated container (100) of the freezer(150) for receiving the frozen sample, having a reservoir (105) for liquid nitrogen, wherein the container (100) comprises at least two separate receiving devices (104) which can be arranged in the reservoir (105) filled with liquid nitrogen and can be removed from the container (100), wherein the freezing machine (150) is configured for automatically filling the reservoir (105) with liquid nitrogen,
wherein one of the receiving devices (104) is selected, and
wherein a sample is automatically transferred to the selected receiving device (104) after an associated freezing process.

7. Method according to claim 6, wherein the selected receiving device (104) is automatically positioned by means of diplacing and/or rotating for the transfer of the sample.

8. Method according to claim 6 or 7, wherein the selected receiving device (104)is automatically assigned to the sample and/or to a freezing process associated with the sample and the assignment is stored and/or output.

9. Method according to claim 6, 7 or 8, wherein the frozen sample is transferred in a freezer (150) according to any one of claims 1 to 5.

## Revendications

1. Machine de congélation (150) pour la congélation d'échantillons comprenant:
un dispositif de congélation (140) pour congeler un échantillon reçu dans la machine de congélation (150),
un récipient (100) pour recevoir l'échantillon congelé avec un réservoir (105) pour l'azote liquide, et
un dispositif de transfert pour transférer l'échantillon congelé du dispositif de congélation (140) au récipient (100),
**caractérisé** ce que le récipient (100) présenteau moins deux dispositifs de reception (104) séparés pour au moins un échantillon congelé chacun, les au moins deux dispositifs de reception (104) pouvant être disposésdans le réservoir (105) à remplir d'azote liquide et pouvant être retirésdu récipient (100),
dans lequel un dispositif de selection est prévupour sélectionner l'un des moyens de reception (104) pour un échantillon congelé à transférer dans le récipient (100),
dans lequel la machine de congélation (150) est adaptée pour effectuer le transfert de l'échantillon congeléau moyen du dispositif de transfert dans le dispositif récepteur sélectionné (104) du récipient (100), et
dans laquelle la machine de congélation (150) est adaptée pour remplir automatiquement le réservoir(105) d'azote liquide.

2. Machine de congélation (150) selon la revendication 1, dans laquelle les au moins deux dispositifs de réception (104) sont disposés de manière à pouvoir être déplacés et/ou tournés dans le récipient (100).

3. Machine de congélation (150) selon la revendication 2, dans laquelle le dispositif de sélection comprend des moyens d'entraînement (108, 109) au moyen desquels les au moins deux dispositifs de reception (104) sont déplaçables et/ourotatifs.

4. Machine de congélation (150) selon l'une des revendications précédentes, dans laquelle la machine de congélation (150) est adaptée pour positionner automatiquement le dispositif de réception (104) sélectionné pour l'échantillon à transférer de sorte que l'échantillon soit transféré dans le dispositif de réception.

5. Machine de congélation (150) selon l'une des revendications précédentes, dans laquelle la machine de congélation (150) est adaptée pour affecter le dispositif de réception (104) sélectionné pour l' échantillon transférer à l'échantillon et/ou à un processus de congélation associé à l'échantillon et pour stocker et/ou sortir l'affectation.

6. Procédé de transfert d'échantillons congelés dans un machine de congélation (150) vers un moyen de réception sélectionné (104) d'un récipient (100) du congélateur (150) prévuà cet effet pour recevoir l'échantillon congelé, le récipient (100) ayant un réservoir (105) pour l'azote liquide, dans lequel le récipient (100) comprend au moins deux dispositifs de réception séparés (104) qui peuvent être disposésdans le réservoir (105) rempli d'azote liquide et peuventêtreretirés du récipient (100), la machine de congélation (150) étant dispose pour remplir automatiquement le réservoir (105) d'azote liquid,
dans lequel l'un des dispositifs de réception (104) est sélectionné, et
dans laquelle un échantillon est automatiquement transféré au moyen de réception sélectionné (104)après une opération de congélation associée.

7. Procédé selon la revendication 6, dans lequel le dispositif de réception sélectionné (104) est automatiquement positionné par déplacement et/ou rotation pour le transfert de l'échantillon.

8. Procédé selon la revendication 6 ou 7, dans laquelle le dispositif récepteur sélectionné (104) automatiquement associé à l'échantillon et/ou àun processus de congélation associé à l'échantillon et l'association est stockée et/ou sortie.

9. Procédé selon la revendication 6, 7 ou 8, dans laquelle l'échantillon congelé est transféré dans un machine de congélation (150) selon l'une des revendications 1 à 5.
